# EUROPEAN PATENT APPLICATION

(11) **EP 4 757 039 A1**
(43) Date of publication of application: **10.06.2026**
(21) Application number: 24925446.7
(22) Date of filing: 02.08.2024
(51) Int. Cl.: H01M 50/296

(54) **BATTERY AND ELECTRICAL DEVICE**

(30) Priority: 22.02.2024 CN 202420325875 U
(71) Applicant: Contemporary Amperex Technology Co., Limited, Ningde, Fujian 352100 (CN)
(72) Inventor: LONG, Chao, Ningde, Fujian 352100 (CN); CHEN, Xingdi, Ningde, Fujian 352100 (CN); ZHANG, Wenhui, Ningde, Fujian 352100 (CN); WANG, Peng, Ningde, Fujian 352100 (CN)
(74) Representative: Kraus & Lederer PartGmbB
(86) International application number: PCT/CN2024/109639
(87) International publication number: WO 2025/175704

(57) **Abstract**

A battery and an electrical device. The battery (100) comprises a battery module (20), a case body (10), and an output electrode base (120). The battery module (20) is electrically connected to an output electrode (21). The case body (10) comprises a first beam body (110), the first beam body (110) being provided with a clearance recess (111). The output electrode base (120) comprises a main body part (121) and a fixing part (122) which are connected to each other. At least part of the main body part (121) is accommodated in the clearance recess (111), one end of the output electrode (21) being fixed to the main body part (121). The fixing part (122) is arranged on the side of the first beam body (110) facing away from the battery module (20) and is connected to the first beam body (110). With regard to the battery (100) provided in the embodiments, by means of the fixing part (122) of the output electrode base (120), the output electrode base (120) can be assembled to be offset with respect to the top of the first beam body (110), effectively reducing effects on the assembly of the output electrode base (120).

## Description

The present application makes reference to Chinese Patent Application No. 202420325875.8 filed on February 22, 2024 and entitled "Battery and Electric Device", which is incorporated herein by reference in its entirety.

### TECHNICAL FIELD

The present application relates to the technical field of battery structures, and in particular, provides a battery and an electric device.

### BACKGROUND

With continuous development of power batteries, integration of batteries becomes increasingly high, and requirements of high-voltage and high-rate charging of batteries also become increasingly high. Therefore, a quantity of battery cells inside a box of the battery is increasing, and a quantity of wire harnesses is also increasing, thereby leading to an increase in width requirements of components such as a circuit board and a busbar in the box. In addition, a top assembly space of a beam structure inside the box is occupied, which has a great influence on arrangement of an output electrode base for assembling positive and negative output electrodes.

### SUMMARY

An objective of embodiments of the present application is to provide a battery and an electric device, to resolve a problem in a related technology that assembly of an output electrode base is affected due to a top assembly space of a beam structure inside a box being occupied.

To achieve the above-mentioned objective, an embodiment of the present application adopts the technical solutions below:
According to a first aspect, an embodiment of the present application provides a battery, comprising a battery module, a box, and an output electrode base, an output electrode being electrically connected to the battery module, the box comprising a first beam and a second beam that are disposed opposite to each other, an accommodating space for accommodating the battery module being formed between the first beam and the second beam, and an avoidance groove being formed on the first beam. The output electrode base comprises a main body portion and a fastening portion that are connected to each other, at least a part of the main body portion being accommodated in the avoidance groove, one end of the output electrode being fastened to the main body portion, and the fastening portion being disposed on a side that is of the first beam and that faces away from the battery module and is connected to the first beam.

The beneficial effects of this embodiment of the present application are as follows: In the battery provided in this embodiment of the present application, the avoidance groove is formed on the first beam to accommodate at least a part of the main body portion, and the fastening portion is connected to and assembled with the first beam on the side that is of the first beam and that faces away from the battery module, so that an assembly position of the output electrode base and the first beam is on a side portion that is of the first beam and that faces away from the battery module. The output electrode base can be assembled by being staggered from a top of the first beam through the fastening portion of the output electrode base, thereby effectively reducing an influence on assembly of the output electrode base due to a top assembly space of the first beam being occupied, so that the output electrode base can be fastened and assembled more conveniently through the fastening portion.

In some embodiments, the fastening portion comprises a first connection structure and a second connection structure, in the length direction of the first beam, the first connection structure and the second connection structure being respectively connected to two opposite ends of the main body portion; and the first connection structure and the second connection structure being connected to the first beam.

By adopting the above technical solution, the first connection structure and the second connection structure are respectively connected to the two opposite ends of the main body portion in the length direction of the first beam, the first connection structure and the second connection structure are connected to the first beam for fastening, and the first connection structure and the second connection structure at the two ends allow the main body portion to be more stably assembled on the first beam.

In some embodiments, the fastening portion further comprises a third connection structure, the third connection structure being disposed between the first connection structure and the second connection structure, and the third connection structure being connected to the first connection structure, the second connection structure, and the main body portion.

By adopting the above technical solution, the first connection structure, the second connection structure and the main body portion are connected via the third connection structure, so that consistency between the first connection structure and the second connection structure is better, and stability of the main body portion being fastened to the first beam through the first connection structure and the second connection structure can be further improved.

In some embodiments, the third connection structure abuts against an outer wall surface of the side that is of the first beam and that faces away from the battery module.

By adopting the above technical solution, when the first connection structure and the second connection structure are fastened to the first beam, the third connection structure can abut against the outer wall surface of the first beam, so that the first connection structure, the second connection structure, and the third connection structure can jointly act on the first beam, thereby enabling stability of the main body portion to be better.

In some embodiments, the battery further comprises a circuit board, the circuit board being connected to the battery module, and the circuit board being fixedly connected to the first beam; and the circuit board and the fastening portion being respectively connected to different side surfaces of the first beam.

By adopting the above technical solution, the circuit board and the fastening portion are respectively connected to different side surfaces of the first beam, so that an influence on assembly of the fastening portion due to the width of the circuit board occupying the assembly space of the first beam is relatively low.

In some embodiments, the output electrode base further comprises an insulating cover, the insulating cover covering the main body portion and forming an accommodating cavity, and one end of the output electrode being disposed in the accommodating cavity.

By adopting the above technical solution, the insulating cover covers the main body portion to form the accommodating cavity, so that the output electrode fastened to the main body portion can be accommodated in the accommodating cavity, thereby effectively improving a protection effect on the output electrode.

In some embodiments, the main body portion extends in a direction toward the battery module to form a first flanging structure, and a first wiring port for guiding the output electrode into the accommodating cavity is formed between the first flanging structure and the insulating cover.

By adopting the above technical solution, the first wiring port is formed between the first flanging structure and the insulating cover, and the output electrode can access the accommodating cavity from the first wiring port. In addition, the first flanging structure can improve an insulation protection effect on the output electrode.

In some embodiments, the first flanging structure extends out of the avoidance groove, and the first flanging structure is located between the first beam and the output electrode.

By adopting the above technical solution, the first flanging structure can increase a creepage distance between the output electrode and the first beam, so as to reduce a probability of electric leakage.

In some embodiments, the box further comprises a partition plate, the partition plate extending between the output electrode and the first flanging structure.

By adopting the above technical solution, the partition plate can extend between the output electrode and the first flanging structure, so that the partition plate and the first flanging structure overlap between the output electrode and the first beam, thereby further reducing a probability of electric leakage.

In some embodiments, the main body portion extends in the length direction of the first beam to form a second flanging structure, and the second flanging structure is disposed on an outer surface of the first beam.

By adopting the above technical solution, by extending in the length direction of the first beam to form the second flanging structure, the second flanging structure can increase the creepage distance between the output electrode and the first beam in the length direction of the first beam.

In some embodiments, the second flanging structure is connected to the first flanging structure and the fastening portion.

By adopting the above technical solution, the second flanging structure is connected to the first flanging structure and the fastening portion, so that the creepage distance between the output electrode in the accommodating cavity and the first beam can be increased in the length direction toward the first beam or in any direction intersecting the length direction of the first beam, and the insulation protection effect is better. In addition, the first flanging structure, the second flanging structure, and the fastening portion can enclose a groove opening of the avoidance groove, so as to improve a sealing effect on the avoidance groove, thereby reducing a probability that metal scraps existing inside the first beam fall out of the avoidance groove.

In some embodiments, an undulating structure is formed on a surface of a side that is of the second flanging structure and that faces the insulating cover.

By adopting the above technical solution, because creepage occurs along a surface of an insulator, forming the undulating structure on the second flanging structure can effectively increase the creepage distance from the output electrode to the first beam, and further improve the protection effect on the output electrode base.

In some embodiments, a first limiting portion is formed on the insulating cover, and the first limiting portion is in insertion fit with the undulating structure.

By adopting the above technical solution, the insulating cover is in insertion fit with the undulating structure through the first limiting portion, and the undulating structure can limit movement of the first limiting portion, thereby limiting movement of the insulating cover.

In some embodiments, the main body portion is recessed in the length direction of the first beam to form a snap-fitting groove, a snap-fitting portion is formed on the insulating cover, and the snap-fitting portion is inserted into the snap-fitting groove.

By adopting the above technical solution, the snap-fitting portion on the insulating cover is inserted into the snap-fitting groove of the main body portion for connection, so that the snap-fitting groove limits movement of the snap-fitting portion, thereby maintaining the insulating cover in a state of covering the main body portion.

In some embodiments, a limiting groove is formed on the main body portion, a second limiting portion is formed on the insulating cover, the second limiting portion is inserted into the limiting groove, and the limiting groove is configured to limit movement of the second limiting portion in a direction perpendicular to the length direction of the first beam.

By adopting the above technical solution, the insulating cover can be limited by and inserted into the limiting groove of the main body portion through the second limiting portion, and the limiting groove can limit movement of the second limiting portion in the direction perpendicular to the length direction of the first beam, thereby also limiting movement of the insulating cover in the direction perpendicular to the length direction of the first beam.

In some embodiments, the main body portion comprises a base portion, a first enclosing portion disposed on the base portion, and two second enclosing portions that are disposed on the base portion and that are disposed opposite to each other, the two second enclosing portions being connected to the first enclosing portion; and the insulating cover, the base portion, the first enclosing portion, and the second enclosing portions enclose to form the accommodating cavity.

By adopting the above technical solution, the insulating cover is used to cover and enclose the base portion, the first enclosing portion, and the two second enclosing portions and form the accommodating cavity, so as to perform insulation protection for the output electrode.

In some embodiments, the output electrode base further comprises a connection portion, the connection portion being disposed on the main body portion and located in the accommodating cavity, and the output electrode being connected to the connection portion.

By adopting the above technical solution, the output electrode can be connected to the connection portion in the accommodating cavity, thereby facilitating an operation of connecting the output electrode in the accommodating cavity.

According to a second aspect, an embodiment of the present application further provides an electric device, comprising the battery described above, the battery being configured to provide electrical energy.

The beneficial effects of this embodiment of the present application are as follows: The electric device provided by this embodiment of the present application comprises the battery described above, so that an assembly structure of the battery used on the electric device is improved, and an assembly process of the electric device is also improved.

### BRIEF DESCRIPTION OF THE DRAWINGS

To describe technical solutions in embodiments of the present application more clearly, the following briefly describes the accompanying drawings for describing the embodiments or the related technology. It is clear that the accompanying drawings described in the following are merely embodiments of the present application. Those of ordinary skill in the art can still derive other accompanying drawings from these accompanying drawings without creative efforts.
FIG. 1 is a schematic structural diagram of a vehicle according to an embodiment of the present application;
FIG. 2 is an exploded view of a battery according to an embodiment of the present application;
FIG. 3 is a schematic diagram of an internal structure of a box according to an embodiment of the present application;
FIG. 4 is a partially enlarged schematic view of A in FIG. 3;
FIG. 5 is a schematic structural diagram of an output electrode base according to an embodiment of the present application;
FIG. 6 is an internal cross-sectional view of an output electrode base and an insulating cover according to an embodiment of the present application; and
FIG. 7 is an internal cross-sectional view of an output electrode base and an insulating cover from another perspective according to an embodiment of the present application.

In which, reference numerals in the figures:
1000. vehicle; 100. battery; 200. controller; 300. motor;
10. box; 101. accommodating space; 11. first portion; 12. second portion; 13. partition plate;
110. first beam; 111. avoidance groove;
120. output electrode base; 121. main body portion; 121a. base portion; 121b. first enclosing portion; 121c. second enclosing portion; 1211. first flanging structure; 1212. second flanging structure; 12121. undulating structure; 1213. snap-fitting groove; 1214. limiting groove; 122. fastening portion; 1221. first connection structure; 1222. second connection structure; 1223. third connection structure; 123. connection portion;
130. insulating cover; 1301. accommodating cavity; 1302. first wiring port; 131. first limiting portion; 132. snap-fitting portion; 133. second limiting portion; 140. second beam;
20. battery module 21. output electrode; 22. external electrical connection structure;
30. circuit board;
X. length direction of first beam.

### DETAILED DESCRIPTION OF PREFERRED EMBODIMENTS

The embodiments of the present application will be described in detail below. The examples of the embodiments are shown in the accompanying drawings, in which the same or similar reference numerals denote the same or similar elements or elements with the same or similar functions throughout. The embodiments described below with reference to the drawings are exemplary and are intended to explain the present application, and should not be construed as limiting the present application.

In the description of the present application, it should be understood that the orientation or positional relationship indicated by the terms such as "length", "width", "upper", "lower", "front", "rear", "left", "right", "vertical", "horizontal", "top", "bottom", "inner" and "outer" is based on the orientation or positional relationship shown in the drawings, only to facilitate the description of the present application and simplify the description, rather than to indicate or imply that the referred device or element must have a specific orientation, be constructed and operated in a specific orientation, and therefore cannot be understood as a limitation to the present application.

In addition, the terms "first" and "second" are only used for descriptive purposes, and should not be construed as indicating or implying relative importance or implicitly indicating the number of technical features indicated. Thus, a feature defined by "first" and "second" may explicitly or implicitly indicates that the feature is singular or plural. In the description of the present application, the meaning of "a plurality of" is two or more, unless otherwise specifically defined.

In the present application, unless otherwise specified and defined explicitly, the terms "mount", "connect", "join", and "fasten" should be understood in their general senses. For example, the connection may be a fixed connection, a detachable connection, or an integral connection; may be a mechanical connection or an electrical connection; or may be a direct connection, an indirect connection via an intermediate medium, or an internal communication between two elements or interaction between two elements. Those of ordinary skill in the art can understand specific meanings of these terms in the present application according to specific situations.

At present, in view of the development of the market, the use of power batteries is becoming increasingly more widespread. Power batteries are used not only in energy storage power systems such as hydropower, thermal power, wind power, and solar power plants, but also in electric tools such as electric bicycles, electric motorcycles, and electric vehicles, as well as military equipment, aerospace, and many other fields. As an application field of power batteries continues to expand, a market demand for power batteries continues to increase.

To improve an energy density, integration of batteries becomes increasingly high. In addition, to implement rapid charging of a battery, a current trend is to adopt high-voltage and high-rate charging. However, more battery cells need to be connected in series to form a high-voltage battery, which leads to an increase in a quantity of wiring harnesses and a wider flexible circuit board. In addition, a large current caused by a high-rate battery results in requirements for a wider busbar. Therefore, a top assembly space of a beam structure in a box is occupied, especially in the length direction of an internal beam, which has a great influence on arrangement of an output electrode base for assembling positive and negative output electrodes.

Based on the above considerations, to resolve the problem that assembly of the output electrode base is affected due to the top assembly space of the beam structure inside the box being occupied, a battery is designed. By forming an avoidance groove on a first beam of the box, a main body portion of the output electrode base can be accommodated in the avoidance groove, and a fastening portion can be fastened to the first beam on a side facing away from a battery module. Therefore, the fastening portion can be assembled by being staggered from a top of the first beam, thereby effectively reducing an influence on assembly of the output electrode base due to the top assembly space of the first beam being occupied, so that the output electrode base can be fastened and assembled more conveniently through the fastening portion.

The battery disclosed in the embodiments of the present application can be applied to an electric device using a battery as a power supply or various energy storage systems using a battery as an energy storage component. The electric device may be, but is not limited to, a mobile phone, a tablet computer, a notebook computer, an electric toy, an electric tool, a battery-powered vehicle, an electric vehicle, a ship, a spacecraft, and the like. The electric toy may include a stationary or mobile electric toy, such as a game machine, an electric car toy, an electric ship toy, an electric airplane toy, and the like, and the spacecraft may be an airplane, a rocket, a space shuttle, a spaceship, etc.

For ease of description, the following embodiments are described by using an example in which an electric device in an embodiment of the present application is a vehicle 1000.

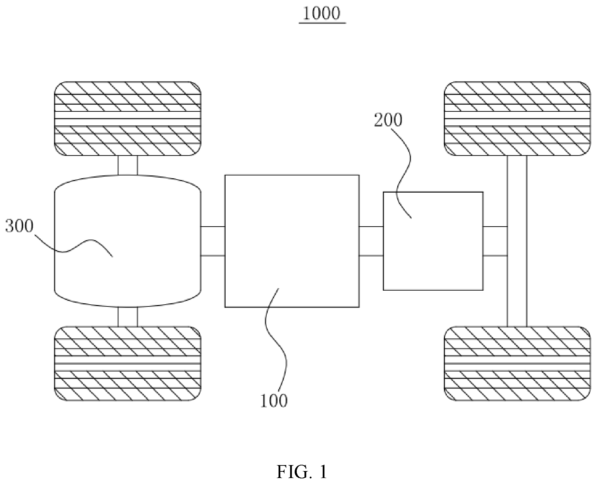

Referring to FIG. 1, FIG. 1 is a schematic structural diagram of a vehicle 1000 according to some embodiments of the present application. The vehicle 1000 may be a fuel vehicle, a gas vehicle, or a new energy vehicle, and the new energy vehicle may be a battery electric vehicle, a hybrid vehicle, or a range-extended electric vehicle. Inside the vehicle 1000, a battery 100 is provided, which may be provided at the bottom, head, or tail of the vehicle 1000. The battery 100 may be configured to power the vehicle 1000, for example, the battery 100 may be used as an operating power source of the vehicle 1000. The vehicle 1000 may further include a controller 200 and a motor 300, where the controller 200 is configured to control the battery 100 to power the motor 300, for example, for a working power requirement of the vehicle 1000 during starting, navigating, and driving.

In some embodiments of the present application, the battery 100 may be used not only as the operating power source of the vehicle 1000, but also as a driving power source of the vehicle 1000, instead of or partially instead of fuel or natural gas to provide driving power for the vehicle 1000.

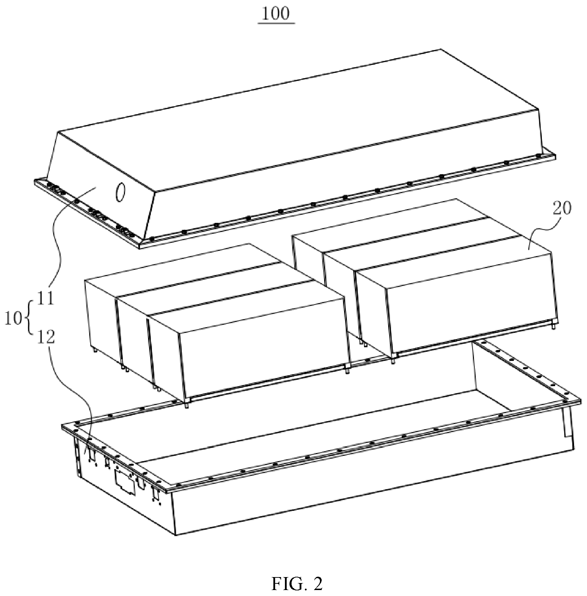

Referring to FIG. 2, FIG. 2 is an exploded view of a battery 100 according to some embodiments of the present application. The battery 100 includes a box 10 and a battery module 20. The battery module 20 is accommodated in the box 10. The battery module 20 is a module structure formed by arranging a plurality of battery cells and connecting the battery cells in series and parallel through a busbar. The box 10 is configured to provide an accommodating space for the battery module 20, and the box 10 may have various structures. In some embodiments, the box 10 may include a first portion 11 and a second portion 12, where the first portion 11 and the second portion 12 fit to each other to jointly define an accommodating space for accommodating the battery module 20. The second portion 12 may be a hollow structure open at one end, for example, a hollow structure that is open at one end and that is formed by connecting and enclosing a bottom plate and side beams. The first portion 11 may be a plate-shaped structure, and the first portion 11 covers an open side of the second portion 12, so that the first portion 11 and the second portion 12 jointly define the accommodating space. Alternatively, the first portion 11 and the second portion 12 may each be a hollow structure open on one side, for example, a hollow structure that is open at one end and that is formed by connecting and enclosing a bottom plate and side beams. The open side of the first portion 11 covers the open side of the second portion 12. Certainly, the box 10 formed by the first portion 11 and the second portion 12 may be in various shapes such as a cylinder and a cuboid.

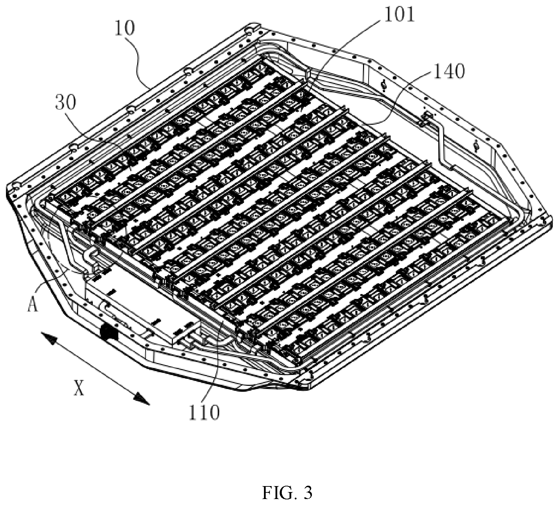

According to some embodiments of the present application, referring to FIG. 3 to FIG. 6, the embodiments of the present application provide a battery 100, including a box 10, a battery module 20, and an output electrode base 120, where an output electrode 21 is electrically connected to the battery module 20, the box 10 includes a first beam 110 and a second beam 140 that are disposed opposite to each other, an accommodating space 101 for accommodating the battery module 20 is formed between the first beam 110 and the second beam 140, and an avoidance groove 111 is formed on the first beam 110. The output electrode base 120 includes a main body portion 121 and a fastening portion 122 that are connected to each other, at least a part of the main body portion 121 is accommodated in the avoidance groove 111, one end of the output electrode 21 is fastened to the main body portion 121, and the fastening portion 122 is disposed on a side that is of the first beam 110 and that faces away from the battery module 20 and is connected to the first beam 110.

The first beam 110 and the second beam 140 are two internal beam structures that are disposed opposite to each other on the box 10, and the accommodating space 101 may be formed between the first beam 110 and the second beam 140 for accommodating the battery module 20. Optionally, the first beam 110 and the second beam 140 may be various beam structures such as a rolling beam and a profile beam.

The avoidance groove 111 is formed on the first beam 110. Optionally, an opening is formed on a wall surface of one side of the first beam 110 to form the avoidance groove 111. Alternatively, an opening is formed on each of two intersecting wall surfaces of the first beam 110 to form the avoidance groove 111. Therefore, the main body portion 121 of the output electrode base 120 can enter the avoidance groove 111 through the opening, so that at least a part of the main body portion 121 is accommodated in the avoidance groove 111.

The output electrode base 120 includes the main body portion 121 and the fastening portion 122. The main body portion 121 is a structural member having insulation properties, for example, a base structure formed from materials such as silica gel, rubber, and plastic, and the main body portion 121 may be, but is not limited to, a plate structure, a frame structure, a bracket structure, and the like. Optionally, the main body portion 121 may be partially accommodated in the avoidance groove 111 and partially extend out of the avoidance groove 111. Alternatively, the main body portion 121 may be completely accommodated in the avoidance groove 111.

It can be understood that the main body portion 121 is accommodated in the avoidance groove 111, and the main body portion 121 may abut against a groove inner wall of the avoidance groove 111, that is, a wall surface on an inner side of the first beam 110. The main body portion 121 may be fixedly connected to the groove inner wall of the avoidance groove 111 by bonding, snap-fitting, welding, or the like. Alternatively, the main body portion 121 may be only accommodated in the avoidance groove 111 and not be connected to the groove inner wall of the avoidance groove 111.

The fastening portion 122 may be connected to the main body portion 121 by fastener connection, bonding, or integral injection molding to be integrally formed. The fastening portion 122 is configured to be connected and fastened to the first beam 110, so as to fixedly assemble the main body portion 121 in the avoidance groove 111 of the first beam 110.

Optionally, the fastening portion 122 includes, but is not limited to, a block structure, a sheet structure, a bracket structure, and the like. The fastening portion 122 may be fastened to a beam side surface of the first beam 110 by fastener connection or bonding.

The fastening portion 122 is connected to the side that is of the first beam 110 and that faces away from the battery module 20. It can be understood that an exposed top side wall surface that intersects the above-mentioned two opposite side wall surfaces is also disposed between the side that is of the first beam 110 and that faces away from the battery module 20 and the other side that is of the first beam 110 and that faces the battery module 20, and the top side wall surface is configured to fasten and assemble a structural member (such as a circuit board, and a bead) inside the battery 100. Therefore, the output electrode base 120 is fixedly connected to the side that is of the first beam 110 and that faces away from the battery module 20 through the fastening portion 122, and can be staggered from a top side of the first beam 110 for assembly and fastening, so that the fastening portion 122 has a more sufficient assembly space.

The output electrode 21 is configured to output electric energy to an external device, and the output electrode 21 may be a material member having better electrical conductivity such as a copper sheet, an aluminum sheet, or a copper-aluminum composite material. For example, the output electrode 21 may be a copper busbar.

In the battery 100 provided in this embodiment of the present application, the avoidance groove 111 is formed on the first beam 110 to accommodate at least a part of the main body portion 121, and the fastening portion 122 is connected to and assembled with the first beam 110 on the side that is of the first beam 110 and that faces away from the battery module 20, so that an assembly position of the output electrode base 120 and the first beam 110 is on a side portion that is of the first beam 110 and that faces away from the battery module 20. The output electrode base 120 can be assembled by being staggered from the top of the first beam 110 through the fastening portion 122 of the output electrode base, thereby effectively reducing an influence on assembly of the output electrode base 120 due to the top assembly space of the first beam 110 being occupied, so that the output electrode base 120 can be fastened and assembled more conveniently through the fastening portion 122.

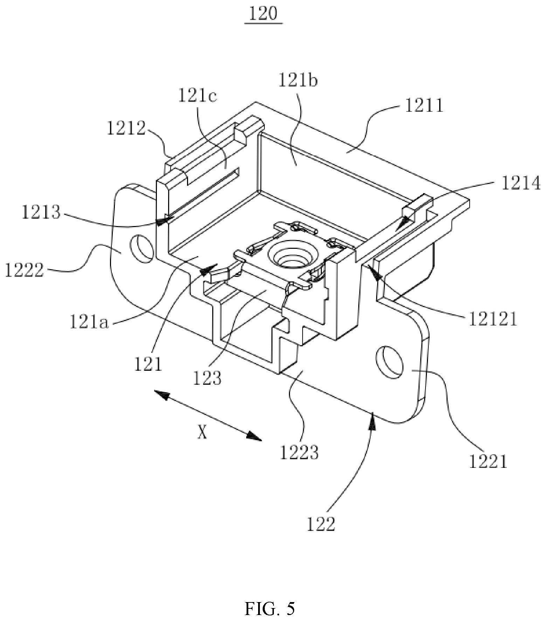

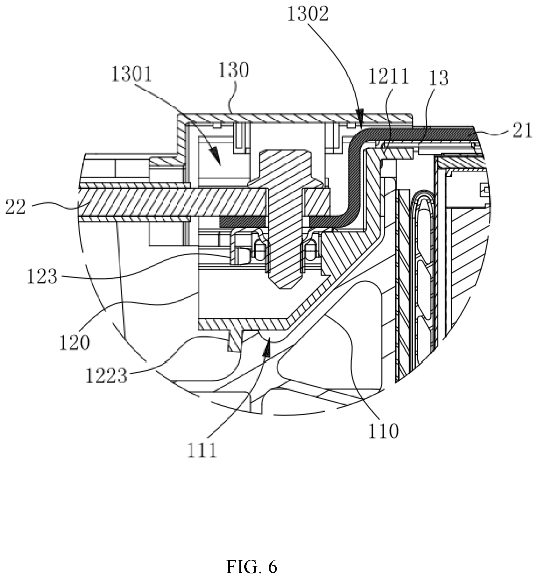

Referring to FIG. 5 and FIG. 6, in some embodiments, the fastening portion 122 includes a first connection structure 1221 and a second connection structure 1222, and in a length direction X of the first beam 110, the first connection structure 1221 and the second connection structure 1222 are respectively connected to two opposite ends of the main body portion 121. The first connection structure 1221 and the second connection structure 1222 are connected to the first beam 110.

The first connection structure 1221 and the second connection structure 1222 are connected to the main body portion 121. Optionally, the first connection structure 1221 may be fixedly connected to the main body portion 121 by bonding, welding, fastener connection, integral molding, or the like. Similarly, the second connection structure 1222 may also be fixedly connected to the main body portion 121 by bonding, welding, fastener connection, integral molding, or the like. For example, both the first connection structure 1221 and the second connection structure 1222 may be integrally formed on the main body portion 121.

The first connection structure 1221 and the second connection structure 1222 are connected to the first beam 110. Optionally, the first connection structure 1221 may be fixedly connected to the first beam 110 by bonding, welding, fastener connection, integral molding, or the like. Similarly, the second connection structure 1222 may also be fixedly connected to the first beam 110 by bonding, welding, fastener connection, integral molding, or the like. For example, both the first connection structure 1221 and the second connection structure 1222 may be fastened to the first beam 110 by using a fastener (for example, a bolt or a screw).

Optionally, the first connection structure 1221 includes, but is not limited to, a connection block, a connection sheet, a connection plate, a connection bracket, and another structure. Similarly, the second connection structure 1222 includes, but is not limited to, a connection block, a connection sheet, a connection plate, a connection bracket, and another structure.

With this arrangement, the first connection structure 1221 and the second connection structure 1222 are respectively connected to the two opposite ends of the main body portion 121 in the length direction X of the first beam 110, and the first connection structure 1221 and the second connection structure 1222 are connected to the first beam 110 for fastening, and the first connection structure 1221 and the second connection structure 1222 at the two ends allow the main body portion 121 fixedly assembled on the first beam 110 to be more stable.

Referring to FIG. 5 and FIG. 6, in some embodiments, the fastening portion 122 further includes a third connection structure 1223, where the third connection structure 1223 is disposed between the first connection structure 1221 and the second connection structure 1222, and the third connection structure 1223 is connected to the first connection structure 1221, the second connection structure 1222, and the main body portion 121.

Optionally, the third connection structure 1223 may be fixedly connected to the main body portion 121 by bonding, welding, fastener connection, integral molding, or the like. Similarly, the third connection structure 1223 may also be connected to the first connection structure 1221 and the second connection structure 1222 by bonding, welding, fastener connection, integral molding, or the like. For example, the first connection structure 1221, the second connection structure 1222, the third connection structure 1223 and the main body portion 121 are all integrally formed.

The third connection structure 1223 may be fixedly connected to the first beam 110, or the third connection structure 1223 may abut against a surface of the first beam 110 without a connection relationship, or a spacing may be formed between the third connection structure 1223 and the first beam 110.

Optionally, the third connection structure 1223 includes, but is not limited to, a connection block, a connection sheet, a connection plate, a connection bracket, and another structure.

With this arrangement, the first connection structure 1221, the second connection structure 1222 and the main body portion 121 are connected via the third connection structure 1223, so that consistency between the first connection structure 1221 and the second connection structure 1222 is better, and stability of the main body portion 121 being fastened to the first beam 110 through the first connection structure 1221 and the second connection structure 1222 can be further improved.

Referring to FIG. 5 and FIG. 6, in some embodiments, the third connection structure 1223 abuts against the outer wall surface of the side that is of the first beam 110 and that faces away from the battery module 20.

It can be understood that when the first connection structure 1221 and the second connection structure 1222 are fixedly connected to the first beam 110, the third connection structure 1223 abuts against the outer wall surface of the side that is of the first beam 110 and that faces away from the battery module 20.

With this arrangement, when the output electrode base 120 is fixedly assembled to the first beam 110, the first connection structure 1221 and the second connection structure 1222 are fixedly connected to the first beam 110, and the third connection structure 1223 can abut against the outer wall surface of the first beam 110, so that the first connection structure 1221, the second connection structure 1222, and the third connection structure 1223 can jointly act on the first beam 110, thereby enabling stability of the main body portion 121 to be better. In addition, the first connection structure 1221, the second connection structure 1222, and the third connection structure 1223 can further block the avoidance groove 111, thereby reducing a probability that metal scraps existing inside the first beam 110 fall out of the avoidance groove 111.

Referring to FIG. 3 to FIG. 5, in some embodiments, the battery 100 further includes a circuit board 30, where the circuit board 30 is connected to the battery module 20, and the circuit board 30 is fixedly connected to the first beam 110. The circuit board 30 and the fastening portion 122 are respectively connected to different side surfaces of the first beam 110.

It can be understood that the circuit board 30 is fixedly connected to the first beam 110, and the circuit board 30 is specifically fixed to the top of the first beam 110. The top is an exposed wall surface that intersects with the side surface that is of the first beam 110 and that faces the battery module 20 and the side surface that is of the first beam 110 and that faces away from the battery module 20.

With this arrangement, the circuit board 30 and the fastening portion 122 are respectively connected to different side surfaces of the first beam 110, so that an influence on assembly of the fastening portion 122 due to the width of the circuit board 30 occupying the assembly space of the first beam 110 is relatively low.

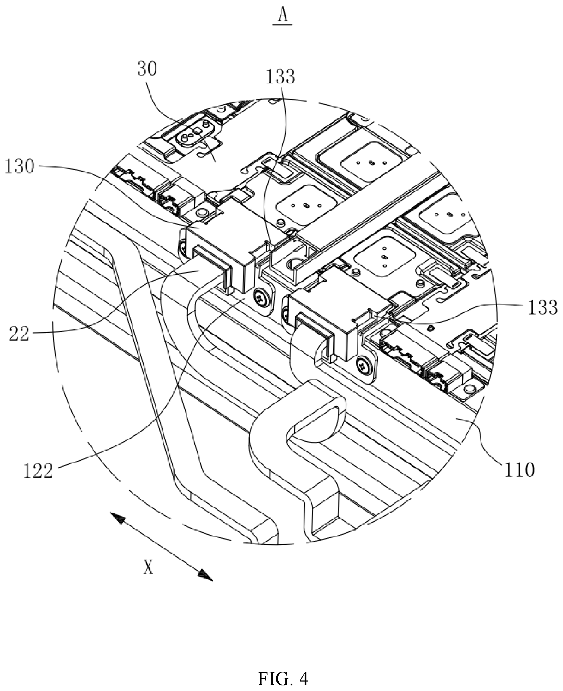

Referring to FIG. 4 to FIG. 6, in some embodiments, the output electrode base 120 further includes an insulating cover 130, the insulating cover 130 covers the main body portion 121 and forms an accommodating cavity 1301, and one end of the output electrode 21 is disposed in the accommodating cavity 1301.

The insulating cover 130 is a structural member having insulation properties, for example, a cover structure formed from materials such as silica gel, rubber, and plastic. The insulating cover 130 can cover the main body portion 121 and form the accommodating cavity 1301, thereby allowing one end of the output electrode 21 to be disposed in the accommodating cavity 1301, so that the output electrode 21 can be connected to an external electrical connection structure 22.

Optionally, the insulating cover 130 may be a hollow structure open at one end, the insulating cover 130 covers the main body portion 121 through the open end of the insulating cover 130 and forms the relatively sealed accommodating cavity 1301, and the output electrode 21 and the external electrical connection structure 22 can both pass into the accommodating cavity 1301 to be connected.

The external electrical connection structure 22 may be a conductive structure such as a busbar or a current-conducting bar.

With this arrangement, the insulating cover 130 covers the main body portion 121 to form the accommodating cavity 1301, so that the output electrode 21 fastened to the main body portion 121 can be accommodated in the accommodating cavity 1301, thereby effectively improving a protection effect on the output electrode 21.

Referring to FIG. 4 to FIG. 6, in some embodiments, the main body portion 121 extends in a direction toward the battery module 20 to form a first flanging structure 1211, and a first wiring port 1302 for guiding the output electrode 21 into the accommodating cavity 1301 is formed between the first flanging structure 1211 and the insulating cover 130.

It can be understood that a gap through which the output electrode 21 can pass may be formed between the first flanging structure 1211 and the insulating cover 130, and the gap is the first wiring port 1302. Alternatively, a slot structure may be formed on a portion that is of the insulating cover 130 and that faces the first flanging structure 1211, so that the first flanging structure 1211 encloses the slot structure to form the first wiring port 1302.

It can be understood that the direction toward the battery module 20 may be a direction perpendicular to the length direction X of the first beam 110.

Because the first flanging structure 1211 is formed by extending in the direction toward the battery module 20, the first flanging structure 1211 faces the accommodating space 101, and the output electrode 21 can pass through the first wiring port 1302 from the accommodating space 101 and enter the accommodating cavity 1301 to be connected to the external electrical connection structure 22.

With this arrangement, the first wiring port 1302 is formed between the first flanging structure 1211 and the insulating cover 130, and the output electrode 21 can enter the accommodating cavity 1301 from the first wiring port 1302. In addition, the first flanging structure 1211 can improve an insulation protection effect on the output electrode 21.

Referring to FIG. 4 to FIG. 6, in some embodiments, the first flanging structure 1211 extends out of the avoidance groove 111, and the first flanging structure 1211 is located between the first beam 110 and the output electrode 21.

It can be understood that the first flanging structure 1211 is formed on the main body portion 121, and the first flanging structure 1211 extends out of the avoidance groove 111, so that a portion that is of the first beam 110 and that is located at a groove opening of the avoidance groove 111 can be shielded between the first flanging structure 1211 located outside the avoidance groove 111 and the main body portion 121 located inside the avoidance groove 111, to implement insulation protection.

In addition, the first flanging structure 1211 is further located between the first beam 110 and the output electrode 21. Further, the first flanging structure 1211 can separate, at the first wiring port 1302, the output electrode 21 and the portion that is of the first beam 110 and that is located at the groove opening of the avoidance groove 111. Therefore, the first flanging structure 1211 can increase a creepage distance between the first beam 110 and the output electrode 21, so as to further improve the insulation protection effect on the first beam 110.

Referring to FIG. 3 to FIG. 6, in some embodiments, the box 10 further includes a partition plate 13, and the partition plate 13 extends between the output electrode 21 and the first flanging structure 1211.

The partition plate 13 has an insulation property, the partition plate 13 is configured to be disposed in the accommodating space 101, and the partition plate 13 is a bracket structure for integrating and fastening an internal structure (for example, a busbar or a sampling harness).

With this arrangement, by enabling the partition plate 13 having an insulation property to extend between the output electrode 21 and the first beam 110, the partition plate 13 and the first flanging structure 1211 overlap between the output electrode 21 and the first beam 110, thereby effectively increasing the creepage distance between the output electrode 21 and the first beam 110, and further improving the insulation protection effect between the output electrode 21 and the first beam 110.

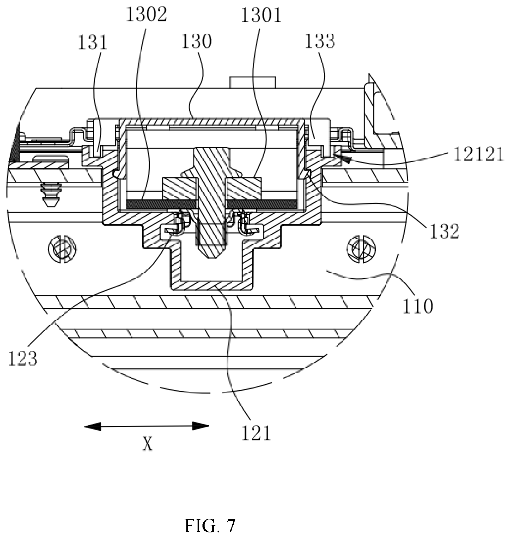

Referring to FIG. 4 to FIG. 7, in some embodiments, the main body portion 121 extends in the length direction X of the first beam 110 to form a second flanging structure 1212, and the second flanging structure 1212 is disposed on an outer surface of the first beam 110.

Optionally, the main body portion 121 may form the second flanging structure 1212 on any side of the first beam 110 in the length direction X, or the main body portion 121 may form the second flanging structure 1212 on each of two opposite sides of the first beam 110 in the length direction X.

The second flanging structure 1212 is disposed on the outer surface of the first beam 110. It can be understood that the second flanging structure 1212 may abut against the outer surface of the first beam 110, or may be fastened to the outer surface of the first beam 110 by bonding or fastener connection. Alternatively, a spacing may be formed between the second flanging structure 1212 and the outer surface of the first beam 110.

With this arrangement, by forming the second flanging structure 1212 in the length direction X of the first beam 110, the second flanging structure 1212 can increase the creepage distance between the output electrode 21 and the first beam 110 in the length direction X of the first beam 110.

Referring to FIG. 4 to FIG. 7, in some embodiments, the second flanging structure 1212 is connected to the first flanging structure 1211 and the fastening portion 122.

It can be understood that the second flanging structure 1212 may be connected to the first flanging structure 1211, for example, by bonding, fastener connection, splicing, or the like, or the second flanging structure 1212 and the first flanging structure 1211 are integrally formed by injection molding or the like. Similarly, the second flanging structure 1212 may be connected to the fastening portion 122 by bonding, fastener connection, splicing, or the like, or may be integrally formed by injection molding or the like.

The second flanging structure 1212 is formed on each of two opposite sides of the main body portion 121 in the length direction X of the first beam 110, the first flanging structure 1211 is formed on a side that is of the main body portion 121 and that faces the battery module 20, and the second flanging structure 1212 is connected to the fastening portion 122. Therefore, the first flanging structure 1211, the second flanging structure 1212, and the fastening portion 122 can jointly enclose the portion that is of the first beam 110 and that is located at the groove opening of the avoidance groove 111, so that an inside and an outside of the avoidance groove 111 are separated, thereby further reducing a probability that metal scraps in the avoidance groove 111 fall out.

With this arrangement, the second flanging structure 1212 is connected to the first flanging structure 1211 and the fastening portion 122, so that the creepage distance between the output electrode 21 and the first beam 110 can be increased in the length direction X of the first beam 110 or in the direction toward the battery module, and the insulation protection effect is better. In addition, the first flanging structure 1211, the second flanging structure 1212, and the fastening portion 122 can enclose the groove opening of the avoidance groove 111, so as to seal the avoidance groove 111, thereby reducing a probability that metal scraps existing inside the first beam 110 fall out of the avoidance groove 111.

Referring to FIG. 4, FIG. 5 and FIG. 7, in some embodiments, an undulating structure 12121 is formed on a surface of a side that is of the second flanging structure 1212 and that faces the insulating cover 130.

The undulating structure 12121 is formed on the surface of the side that is of the second flanging structure 1212 and that faces the insulating cover 130, and the undulating structure 12121 is a structure that undulates up and down and that is formed on the surface of the second flanging structure 1212. In this way, based on characteristics of creepage, a creepage path through a surface of the undulating structure 12121 is longer, that is, the creepage distance from the output electrode 21 inside the accommodating cavity 1301 to the first beam 110 is increased.

For example, the undulating structure 12121 may be formed by recessing the surface of the second flanging structure 1212 inward, that is, the undulating structure 12121 is a recess structure formed by recessing the surface of the second flanging structure 1212. The undulating structure 12121 may be formed by protruding outward from the surface of the second flanging structure 1212, that is, the undulating structure 12121 is a rib structure formed by protruding from the surface of the second flanging structure 1212.

The undulating structure 12121 may be disposed on the surface of the second flanging structure 1212 in a direction perpendicular to the length direction X of the first beam 110. Optionally, the undulating structure 12121 penetrates the second flanging structure 1212 in the direction perpendicular to the length direction X of the first beam 110. Taking the undulating structure 12121 being an undulating recess as an example, the two opposite ends of the undulating recess can penetrate through the second flanging structure 1212 to the outside in the direction perpendicular to the length direction X of the first beam 110. Therefore, when creepage occurs on the second flanging structure 1212 and extends in the length direction X of the first beam 110, the undulating recess can effectively increase the creepage distance.

It should be understood that a quantity of the undulating structures 12121 may be one or any number greater than one.

With this arrangement, because creepage occurs along the surface of an insulator, forming the undulating structure 12121 on the second flanging structure 1212 can effectively increase the creepage distance from the output electrode 21 to the first beam 110, and further improve the protection effect on the output electrode base 120.

Referring to FIG. 4, FIG. 5 and FIG. 7, in some embodiments, a first limiting portion 131 is formed on the insulating cover 130, and the first limiting portion 131 is in insertion fit with the undulating structure 12121.

It can be understood that the first limiting portion 131 is in insertion fit with the undulating structure 12121. In some implementations, the undulating structure 12121 may be an undulating recess. Therefore, the first limiting portion 131 may be an insertion block formed on the insulating cover 130. The insertion block is inserted into the undulating recess, so that the insertion block can only move along the undulating recess, and the undulating recess can limit movement of the insertion block in another direction.

In some other implementations, the undulating structure 12121 may be an undulating rib. Therefore, the first limiting portion 131 may be an insertion groove formed on the insulating cover 130. The undulating rib may be in insertion fit with the insertion groove, so that the insulating cover 130 is limited to only moving in the length direction of the undulating rib.

With this arrangement, the insulating cover 130 is in insertion fit with the undulating structure 12121 through the first limiting portion 131, and the undulating structure 12121 can limit movement of the first limiting portion 131, thereby limiting movement of the insulating cover 130.

Referring to FIG. 4, FIG. 5 and FIG. 7, in some embodiments, the main body portion 121 is recessed in the length direction X of the first beam 110 to form a snap-fitting groove 1213, a snap-fitting portion 132 is formed on the insulating cover 130, and the snap-fitting portion 132 is inserted into the snap-fitting groove 1213.

It can be understood that the snap-fitting groove 1213 is a groove structure formed on the main body portion 121, and the snap-fitting groove 1213 may be, but is not limited to, a strip-shaped groove, a rectangular groove, a circular groove, or the like. For example, the snap-fitting groove 1213 may be a strip-shaped groove, and the length direction of the strip-shaped groove extends toward the battery module 20. The snap-fitting groove 1213 may be located at any position on an outer surface of the main body portion 121, so that the snap-fitting portion 132 of the insulating cover 130 is inserted into the snap-fitting groove. Optionally, a quantity of the snap-fitting grooves 1213 may be one or any number greater than one.

The snap-fitting portion 132 is formed on the insulating cover 130. Optionally, the snap-fitting portion 132 may be, but is not limited to, a block structure, a sheet structure, or a rod structure formed on the insulating cover 130, and a quantity of the snap-fitting portions 132 may be one or any number greater than one. The snap-fitting portion 132 is configured to be inserted into the snap-fitting groove 1213 to form an insertion fit, and a groove inner wall of the snap-fitting groove 1213 can limit the snap-fitting portion 132 to limit movement of the snap-fitting portion 132.

With this arrangement, the snap-fitting portion 132 of the insulating cover 130 is inserted into the snap-fitting groove 1213 on the main body portion 121 for connection, so that the snap-fitting groove 1213 limits movement of the snap-fitting portion 132, that is, limits movement of the insulating cover 130 relative to the main body portion 121, thereby maintaining the insulating cover 130 in a state of covering the main body portion 121.

For example, in some implementations, the snap-fitting groove 1213 is a strip-shaped groove formed on the main body portion 121, and the snap-fitting portion 132 is a snap-fitting protrusion formed at an end that is of the insulating cover 130 and that faces the main body portion 121. In a process of covering the main body portion 121 with the insulating cover 130, the snap-fitting protrusion is inserted into the strip-shaped groove, so that the insulating cover 130 can be maintained in the state of covering the main body portion 121. When the insulating cover 130 needs to be removed, the insulating cover 130 may be compressed in the length direction X of the first beam 110, so that the snap-fitting protrusion on the insulating cover 130 can be removed from the strip-shaped groove.

Referring to FIG. 4, FIG. 5 and FIG. 7, in some embodiments, a limiting groove 1214 is formed on the main body portion 121, a second limiting portion 133 is formed on the insulating cover 130, the second limiting portion 133 is inserted into the limiting groove 1214, and the limiting groove 1214 is configured to limit movement of the second limiting portion 133 in the direction perpendicular to the length direction X of the first beam 110.

The limiting groove 1214 is a recess structure formed on the main body portion 121, and the limiting groove 1214 may be, but is not limited to, a groove structure such as a strip-shaped groove, a rectangular groove, or a circular groove. A quantity of the limiting grooves 1214 may be one or more than one.

The second limiting portion 133 is formed on the insulating cover 130. Optionally, the second limiting portion 133 may be, but is not limited to, a block structure, a sheet structure, or a rod structure formed on the insulating cover 130, and a quantity of the second limiting portions 133 may be one or any number greater than one. The second limiting portion 133 is configured to be inserted into the limiting groove 1214 to form an insertion fit, and a groove inner wall of the limiting groove 1214 can limit the second limiting portion 133 to limit movement of the second limiting portion 133 in the direction perpendicular to the length direction X of the first beam 110.

For example, in some implementations, two protrusions are formed on the main body portion 121 at intervals in the direction perpendicular to the length direction X of the first beam 110, and the limiting groove 1214 is formed between the two protrusions. When the insulating cover 130 covers the main body portion 121, the second limiting portion 133 can be inserted into the limiting groove 1214, and two opposite ends of the second limiting portion 133 respectively abut against wall surfaces of the two protrusions, thereby limiting movement of the insulating cover 130 in the direction perpendicular to the length direction X of the first beam 110.

Referring to FIG. 4 to FIG. 7, in some embodiments, the main body portion 121 includes a base portion 121a, a first enclosing portion 121b disposed on the base portion 121a, and two second enclosing portions 121c that are disposed on the base portion 121a and that are disposed opposite to each other, and the two second enclosing portions 121c are respectively connected to the first enclosing portion 121b. The insulating cover 130, the base portion 121a, the first enclosing portion 121b, and the second enclosing portions 121c enclose to form the accommodating cavity 1301.

It can be understood that each of the base portion 121a, the first enclosing portion 121b, and the second enclosing portion 121c may be a sheet structure or a block structure, and the base portion 121a, and the first enclosing portion 121b and the two second enclosing portions 121c that are disposed on the base portion 121a may enclose to form a concave groove structure. Therefore, when the insulating cover 130 is sleeved on the main body portion 121, the insulating cover 130 can cover the enclosed groove structure and form the accommodating cavity 1301.

Further, when at least a part of the main body portion 121 is accommodated in the avoidance groove 111, the first enclosing portion 121b of the main body portion 121 faces one side of the battery module 20, and the second enclosing portions 121c are located on two opposite sides of the first enclosing portion 121b in the length direction X of the first beam 110. The first flanging structure 1211 is formed on the first enclosing portion 121b, and sides that are of the two second enclosing portions 121c and that face away from each other respectively extend to form the second enclosing portions 121c. The snap-fitting groove 1213 is formed on a wall surface of each of sides that are of the two second enclosing portions 121c and that are opposite to each other, and the limiting groove 1214 is formed on each of sides that are of the two second enclosing portions 121c and that face away from the base portion 121a. The fastening portion 122 may be connected to an outer surface of the base portion 121a, and extend toward the second enclosing portions 121c on both sides to be connected to the second flanging structures 1212.

Referring to FIG. 4 to FIG. 7, in some embodiments, the output electrode base 120 further includes a connection portion 123, where the connection portion 123 is disposed on the main body portion 121 and located in the accommodating cavity 1301, and the output electrode 21 is connected to the connection portion 123.

The connection portion 123 is a component for being fixedly connected to the output electrode 21 and connecting the output electrode 21 and the external electrical connection structure 22.

Optionally, the connection portion 123 may be a connection portion 123 having a threaded hole, so that the output electrode 21 can be screwed and fastened to the connection portion 123 by a bolt or a screw, to be fixedly connected. Alternatively, the connection portion 123 may be a clamping component having a clamping function, the output electrode 21 is inserted into the clamping component, and the clamping component is operated to clamp the output electrode 21 to be connected.

In some implementations, the connection portion 123 may be a gasket having a threaded hole, a connection groove is formed on the base portion 121a of the main body portion 121, and the gasket is assembled in the connection groove. Therefore, the output electrode 21 and the external electrical connection structure 22 can be stacked on the gasket and screwed into the threaded hole of the gasket by a fastener such as a bolt or a screw, so that the output electrode 21 and the external electrical connection structure 22 are fastened to the gasket, and the connection groove can avoid the fastener such as the bolt or the screw.

With this arrangement, the output electrode 21 can be connected to the connection portion 123 in the accommodating cavity 1301, thereby facilitating an operation of connecting the output electrode 21 in the accommodating cavity 1301.

For example, in some specific implementations, the output electrode base 120 includes the main body portion 121 and the fastening portion 122, where the main body portion 121 includes the base portion 121a, and the first enclosing portion 121b and the two second enclosing portions 121c that are disposed on the base portion 121a, the first enclosing portion 121b extends toward the battery module 20 to form the first flanging structure 1211, the second flanging structures 1212 are respectively formed on the two second enclosing portions 121c, and the second flanging structures 1212 are connected to the first flanging structure 1211 to be integrally formed. The connection groove is formed on the base portion 121a, and the gasket having the threaded hole is assembled in the connection groove. The fastening portion 122 includes the first connection structure 1221, the second connection structure 1222, and the third connection structure 1223 that are connected to each other, a mounting hole is formed on each of the first connection structure 1221 and the second connection structure 1222, the third connection structure 1223 is connected to the outer surface of the base portion 121a, and the first connection structure 1221 and the second connection structure 1222 are respectively connected to outer surfaces of the two second enclosing portions 121c and extend to and are connected to the second flanging structures 1212. Therefore, when the output electrode base 120 is assembled, a part of the main body portion 121 is accommodated in the avoidance groove 111 of the first beam 110, so that the fastening portion 122 abuts against a surface of a side that is of the first beam 110 and that faces away from the battery module 20 and is fastened to the first beam 110 by enabling a fastener to pass through the mounting hole. The fastening portion 122, the first flanging structure 1211, and the second flanging structures 1212 can all abut against the surface of the first beam 110, and can jointly enclose the groove opening of the avoidance groove 111. The insulating cover 130 covers the main body portion 121, so that the insulating cover 130, the base portion 121a, the first enclosing portion 121b, and the second enclosing portions 121c jointly enclose to form the accommodating cavity 1301. The output electrode 21 can pass into the accommodating cavity 1301 from a position between the first flanging structure 1211 and the insulating cover 130, and the external electrical connection structure can pass into the accommodating cavity 1301 from a position between the insulating cover 130 and a side that is of the base portion 121a and that faces away from the first enclosing portion 121b, so that the output electrode 21 and the external electrical connection structure 22 can be secured and connected to the gasket by a bolt to achieve electrical connection.

Referring to FIG. 1, according to a second aspect, an embodiment of the present application further provides an electric device, including the battery 100 described above, where the battery 100 is configured to provide electrical energy. The electric device may be any electric device described in the foregoing embodiments, for example, the vehicle 1000, and details are not described herein again.

The above are only the preferred embodiments of the present application and are not intended to limit the present application. Any modifications, equivalent replacements, improvements, etc. made within the spirit and principles of the present application shall be included in the scope of protection of the present application.

## Claims

1. A battery, **characterized by** comprising:
a battery module, an output electrode being electrically connected to the battery module;
a box, the box comprising a first beam and a second beam that are disposed opposite to each other, an accommodating space for accommodating the battery module being formed between the first beam and the second beam, and an avoidance groove being formed on the first beam; and
an output electrode base, the output electrode base comprising a main body portion and a fastening portion that are connected to each other, at least a part of the main body portion being accommodated in the avoidance groove, and one end of the output electrode being fastened to the main body portion; and the fastening portion being disposed on a side that is of the first beam and that faces away from the battery module and being connected to the first beam.

2. The battery according to claim 1, wherein the fastening portion comprises a first connection structure and a second connection structure, in the length direction of the first beam, the first connection structure and the second connection structure being respectively connected to two opposite ends of the main body portion; and the first connection structure and the second connection structure being connected to the first beam.

3. The battery according to claim 2, wherein the fastening portion further comprises a third connection structure, the third connection structure being disposed between the first connection structure and the second connection structure, and the third connection structure being connected to the first connection structure, the second connection structure, and the main body portion.

4. The battery according to claim 3, wherein the third connection structure abuts against an outer wall surface of the side that is of the first beam and that faces away from the battery module.

5. The battery according to claim 1, wherein further comprising a circuit board, the circuit board being connected to the battery module, and the circuit board being fixedly connected to the first beam; and the circuit board and the fastening portion being respectively connected to different side surfaces of the first beam.

6. The battery according to any one of claims 1 to 5, wherein the output electrode base further comprises an insulating cover, the insulating cover covering the main body portion and forming an accommodating cavity, and one end of the output electrode being disposed in the accommodating cavity.

7. The battery according to claim 6, wherein the main body portion extends in a direction toward the battery module to form a first flanging structure, and a first wiring port for guiding the output electrode into the accommodating cavity is formed between the first flanging structure and the insulating cover.

8. The battery according to claim 7, wherein the first flanging structure extends out of the avoidance groove, and the first flanging structure is located between the first beam and the output electrode.

9. The battery according to claim 7, further comprising a partition plate, the partition plate extending between the output electrode and the first flanging structure.

10. The battery according to any one of claims 7 to 9, wherein the main body portion extends in the length direction of the first beam to form a second flanging structure, and the second flanging structure is disposed on an outer surface of the first beam.

11. The battery according to claim 10, wherein the second flanging structure is connected to the first flanging structure and the fastening portion.

12. The battery according to claim 10, wherein an undulating structure is formed on a surface of a side that is of the second flanging structure and that faces the insulating cover.

13. The battery according to claim 12, wherein a first limiting portion is formed on the insulating cover, and the first limiting portion is in insertion fit with the undulating structure.

14. The battery according to claim 7, wherein the main body portion is recessed in the length direction of the first beam to form a snap-fitting groove, a snap-fitting portion is formed on the insulating cover, and the snap-fitting portion is inserted into the snap-fitting groove.

15. The battery according to claim 14, wherein a limiting groove is formed on the main body portion, a second limiting portion is formed on the insulating cover, the second limiting portion is inserted into the limiting groove, and the limiting groove is configured to limit movement of the second limiting portion in a direction perpendicular to the length direction of the first beam.

16. The battery according to claim 7, wherein the main body portion comprises a base portion, a first enclosing portion disposed on the base portion, and two second enclosing portions that are disposed on the base portion and that are disposed opposite to each other, the two second enclosing portions being connected to the first enclosing portion; and the insulating cover, the base portion, the first enclosing portion, and the second enclosing portions enclose to form the accommodating cavity.

17. The battery according to claim 7, wherein the output electrode base further comprises a connection portion, the connection portion being disposed on the main body portion and located in the accommodating cavity, and the output electrode being connected to the connection portion.

18. An electric device, **characterized by** comprising: the battery according to any one of claims 1 to 17, the battery being configured to provide electric energy.
